# EUROPÄISCHE PATENTANMELDUNG

(11) **EP 2 627 042 A1**
(43) Veröffentlichungstag der Anmeldung: **14.08.2013**
(21) Anmeldenummer: 13000212.4
(22) Anmeldetag: 16.01.2013
(51) Int. Cl.: H04L 12/28, H04L 29/08

(54) **System zur Steuerung eines Gerätes**

(30) Priorität: 10.02.2012 DE 102012002653
(71) Anmelder: ABB AG, 68309 Mannheim (DE)
(72) Erfinder: Nädele, Martin, 8050 Zürich (CH)

(57) **Zusammenfassung**

Die Erfindung betrifft ein System (1) zur Steuerung eines Gerätes (2), wobei das Gerät (2) wenigstens einen Sensor oder wenigstens einen Aktor hat, wobei das System (1) wenigstens eine Eingabe/Ausgabe-Baugruppe (4) umfasst, wobei das System (1) eine Verarbeitungseinheit umfasst, wobei die Eingabe/Ausgabe-Baugruppe (4) mit der Verarbeitungseinheit über eine Kommunikationsverbindung gekoppelt ist. Das System (1) umfasst eine Rechnerwolke (10), wobei die Rechnerwolke (10) dazu eingerichtet ist, um die Aufgaben der Verarbeitungseinheit zu erfüllen, die Eingabe/Ausgabe-Baugruppe (4) außerhalb der Rechnerwolke (10) und nahe des Gerätes (2) angeordnet ist, und die Eingabe/Ausgabe-Baugruppe (4) über eine Kommunikationsverbindung mit der Rechnerwolke (10) verbunden ist.

## Beschreibung

Die Erfindung betrifft ein System zur Steuerung eines Gerätes, wobei das Gerät wenigstens einen Sensor oder wenigstens einen Aktor hat, wobei das System wenigstens eine Eingabe/Ausgabe-Baugruppe umfasst, wobei das System eine Verarbeitungseinheit umfasst, wobei die Eingabe/Ausgabe-Baugruppe mit der Verarbeitungseinheit über eine Kommunikationsverbindung gekoppelt ist, gemäß dem Oberbegriff des Anspruchs 1.

Die Erfindung betrifft weiter .ein Verfahren zur Steuerung eines Gerätes, ein computerlesbares Medium, in dem ein Computerprogramm zur Steuerung eines Gerätes gespeichert ist, sowie ein Computerprogramm zur Steuerung eines Gerätes.

Ein gattungsgemäßes System zur Steuerung eines Gerätes ist beispielsweise eine speicherprogrammierbare Steuerung, auch kurz als SPS bekannt.

Ein Gerät kann beispielsweise eine Anlage, eine Maschine, oder ein Maschinenteil wie beispielsweise eine Pumpe, eine Lampe, ein Motor etc. sein.

Die Anbindung der SPS an das Gerät erfolgt mit Sensoren und Aktoren. Die Sensoren sind an die Eingänge der SPS geschaltet und vermitteln der SPS das Geschehen in dem Gerät. Beispiele für Sensoren sind beispielsweise Lichtschranken, Inkrementgeber, Endschalter, Temperaturfühler, Drehzahlmesser, Füllstandssensoren, Positionssensoren etc. Die Aktoren sind an den Ausgängen der SPS angeschlossen und bieten die Möglichkeit, das Gerät zu steuern. Beispiele für Aktoren sind Schütze zum Einschalten von Motoren, elektrische Ventile für Hydraulik oder Druckluft, etc.

Ein Sensor des Gerätes vermittelt dem System zur Steuerung Informationen über das Geschehen in dem Gerät oder über den Zustand eines oder mehrerer Zustandsvariablen des Gerätes, beispielsweise Temperatur, Druck, Drehzahl, oder ob der Schaltzustand eines Schalters EIN oder AUS ist. Ein Aktor bietet die Möglichkeit, auf das Gerät einzuwirken, beispielsweise eine Funktion zu aktivieren, einen Schalter zu betätigen, eine Drehzahl zu ändern oder dergleichen.

Eine SPS hat im einfachsten Fall Eingänge, Ausgänge, einen Prozessor, ein Betriebssystem, auch als Firmware bezeichnet, und ein Anwenderprogramm. Eingänge und Ausgänge sind in Form von analogen oder digitalen Eingangsbaugruppen oder Ausgangsbaugruppen oder kombinierten Eingabe/Ausgabe-Baugruppen, kurz auch als E/A-Baugruppen oder I/O-Baugruppen bezeichnet, realisiert. Die Eingänge sind mit den Sensoren, die Ausgänge mit den Aktoren verbunden. Die Firmware und das Anwendungsprogramm befinden sich in einem Programmspeicher. Der Prozessor und der Programmspeicher sind Teile der Verarbeitungseinheit. Die Verarbeitungseinheit und die E/A-Baugruppen sind über einen internen Bus, die Kommunikationsverbindung, miteinander verbunden. Oft gibt es noch eine Schnittstelle nach außen, über die das Anwendungsprogramm in den Programmspeicher geladen werden kann.

Das Anwenderprogramm legt im Allgemeinen fest, wie die Ausgänge in Abhängigkeit von den Eingängen geschaltet werden sollen. Die Firmware stellt sicher, dass dem Anwenderprogramm immer der aktuelle Zustand der Sensoren zur Verfügung steht. Anhand dieser Information kann das Anwenderprogramm die Ausgänge so schalten, dass das Gerät, die Maschine oder Anlage, in der gewünschten Weise funktioniert.

Auf vielen Gebieten der industriellen Steuerung und Regelung hat die SPS die zuvor bekannte festverdrahtete Steuerung mittels einer festverdrahteten Anordnung von Relais abgelöst. In manchen Einsatzbereichen ist der Einsatz einer SPS jedoch derzeit nicht möglich oder sinnvoll. So kann der Einsatz einer SPS bei sehr spezialisierten Maschinen oder Anlagen nicht sinnvoll sein, bei denen die Marktnische klein ist und die Stückzahlen gering sind, so dass eine SPS zu teuer wäre.

Auch bei einfachen Steuerungsaufgaben mit sehr wenigen Ein- und Ausgängen ist der Einsatz einer SPS wenig sinnvoll. Beispiele hierfür sind etwa Spielzeuge, bewegliche Teile von Kunst-Installationen, Garten - oder Ladenbeleuchtungen, Bewässerungspumpen im Garten oder auf Feldern, Anlaufsteuerung einzelner Elektromotoren. Oft werden solche einfachen Steuerungsaufgaben auf ähnliche Weise gleichzeitig an einer Vielzahl von räumlich auseinanderliegenden Einsatzorten zu erfüllen sein. Beispielsweise kann das durch Timer gesteuerte Ein- oder Ausschalten einer Gartenbeleuchtung bei vielen Gebäuden in einem Land, unabhängig voneinander, aber relativ funktionsgleich zueinander, gefordert sein. Funktionsgleich bedeutet, dass einfache Standardfunktionen für viele Nutzer parallel, aber gegebenenfalls mit für jeden Nutzer unterschiedlichen Parameterwerten, zur Verfügung stehen. Tausende von Nutzern lassen ihre Beleuchtung durch einen Timer steuern, kein Nutzer weiß etwas vom anderen, dennoch erfolgt an tausenden von Orten die Timer-gesteuerte Schaltung zeitgleich innerhalb eines relativ engen Zeitfensters.

Ein anderes Beispiel für ein System zur Steuerung eines Gerätes ist ein modernes Gebäude-Installationssystem, bei dem mittels eines KNX-Busses, eines Bussystems der Elektroinstallation, verschiedene Geräte eines Gebäudes, wie beispielsweise Schaltaktoren für Lampen, oder Rolladensteuerungen, oder Klimaanlagen-Steuerungen etc, miteinander vernetzt sind und über eine Steuerungszentrale im Gebäude gesteuert werden. Wenn nun ein Anwender nur ein oder zwei Geräte hat, die er intelligent steuern lassen möchte, beispielsweise nur die Gartenbeleuchtung oder nur die Pumpe eines Springbrunnens im Garten, nicht jedoch andere Geräte, so wird sich hierfür die Installation eines Gebäudeautomatisierungssystems nicht lohnen, und dieser Anwender muss heute die dezentrale, fest verdrahtete Steuerung installieren.

Es ist daher die Aufgabe der vorliegenden Erfindung ein kostengünstiges und flexibel anwendbares System zur Steuerung eines Gerätes anzugeben, mit dem einfache Steuerungsaufgaben mit wenig Aufwand an vielen voneinander entfernten Orten relativ zeitnah zueinander ausführbar sind.

Es ist eine weitere Aufgabe der vorliegenden Erfindung, ein Verfahren zur Steuerung eines Gerätes vorzuschlagen, bei dem eine einfache Steuerungsaufgabe kostengünstig, flexibel anwendbar und mit wenig Aufwand an vielen voneinander entfernten Orten relativ zeitnah zueinander ausführbar ist.

Die Aufgabe wird bezüglich des Systems zur Steuerung gelöst durch ein System mit den Merkmalen von Anspruch 1.

Erfindungsgemäß also umfasst das System eine Rechnerwolke, wobei die Rechnerwolke dazu eingerichtet ist, um die Aufgaben der Verarbeitungseinheit zu erfüllen, die Eingabe/Ausgabe-Baugruppe außerhalb der Rechnerwolke und nahe des Gerätes angeordnet ist, und die Eingabe/Ausgabe-Baugruppe über eine Kommunikationsverbindung mit der Rechnerwolke verbunden ist. Eine Rechnerwolke ist auch unter dem Begriff "Cloud-Computing" bekannt.

Der Begriff "Cloud Computing" oder "Rechnerwolke" umschreibt den Ansatz, abstrahierte IT-Infrastrukturen, wie z. B. Rechenkapazität, Datenspeicher, Netzwerkkapazitäten oder auch fertige Software, dynamisch an den Bedarf angepasst über ein Netzwerk zur Verfügung zu stellen. Aus Nutzersicht scheint die zur Verfügung gestellte abstrahierte IT-Infrastruktur fern und undurchsichtig, wie in einer "Wolke" verhüllt, zu geschehen. Angebot und Nutzung dieser Dienstleistungen erfolgen dabei ausschließlich über definierte technische Schnittstellen und Protokolle. Eine Vielzahl von Nutzern kann gleichzeitig und parallel auf dieselben Dienstleistungen zugreifen. Die Spannbreite der im Rahmen von Cloud Computing angebotenen Dienstleistungen umfasst das komplette Spektrum der Informationstechnik und beinhaltet unter anderem Infrastruktur, z. B. Rechenleistung, Speicherplatz, Plattformen oder Software. Vereinfacht kann das Konzept wie folgt beschrieben werden: Ein Teil der Computer-Landschaft, in diesem Zusammenhang etwa Hardware wie Prozessoren, Datenspeicher sowie Software, wird auf Nutzerseite nicht mehr selbst betrieben oder örtlich bereitgestellt, sondern bei einem oder mehreren Anbietern als Dienst gemietet, der meist geografisch fern angesiedelt ist. Die Anwendungen und Daten befinden sich dann nicht mehr auf dem lokalen Rechner oder lokal in einem Computer, sondern in der (metaphorischen) Wolke. Das Gestaltungselement eines abstrahierten Wolkenumrisses wird in Netzwerkdiagrammen häufig zur Darstellung eines nicht näher spezifizierten Teils des Internets verwendet.

Der Zugriff auf die entfernten Systeme erfolgt über ein Netzwerk, beispielsweise das des Internets und/oder über ein Mobilfunknetz. Es gibt aber im Kontext von Firmen auch sogenannte "Private Clouds", bei denen die Bereitstellung über ein firmeninternes Intranet erfolgt. Die meisten Anbieter von Cloudlösungen nutzen die Poolingeffekte, die aus der gemeinsamen Nutzung von Ressourcen entstehen, für ihr Geschäftsmodell.

Um sich eine Cloud-Architektur vorzustellen, kann man sich einen einfachen Rechner vorstellen. Er hat einen oder mehrere Prozessorkerne, Arbeitsspeicher, eine Festplatte und Programme. Diese Komponenten finden sich auch in einer Cloud, nur in einer Form, die massive Skalierung und eine parallele Nutzung durch eine Vielzahl von Nutzern ermöglicht.

Bezogen auf eine erfindungsgemäße Steuerung werden bei einer Rechnerwolke die Aufgaben der Verarbeitungseinheit, also beispielsweise das Einlesen der Eingänge, das Erzeugen des Prozessabbildes der Eingänge, das Übermitteln des Prozessabbildes der Eingänge an das Anwendungsprogramm, das Erzeugen des Prozessabbildes der Ausgänge durch das Anwendungsprogramm, das Übermitteln des Prozessabbildes der Ausgänge an das Gerät über das Betriebssystem, nicht mehr von einem einzelnen Rechner vor Ort in oder an dem zusteuernden Gerät ausgeführt bzw. verarbeitet, sondern dynamisch an den Bedarf angepasst in einem Netzwerk von Rechnern. Rechen- und speicherintensive Aufgaben einer SPS werden gewissermaßen in die Rechnerwolke ausgelagert. Vor Ort an dem zu steuernden Gerät bleibt lediglich eine oder mehrere einfache E/A-Einheiten. Vor Ort befindet sich kein Algorithmus, keine Logik, keine Steuerung oder Regelung mehr, diese befinden sich alle in der Rechnerwolke. Die einfachen E/A-Einheiten sind in besonders günstiger Ausführungsform un-intelligent. Dadurch wird die lokale Installation sehr kostengünstig und einfach, da nur noch einfache, un-intelligente E/A-Einheiten installiert werden müssen.

Alle komplexen, rechen- und speicherintensiven Aufgaben werden in der Rechnerwolke ausgeführt. Sie werden daher zentral installiert und gewartet, und sie können dadurch einer Vielzahl von Nutzern parallel zur Verfügung gestellt werden.

Der einzelne Nutzer hat geringen Aufwand bei Installation und Wartung der Hard- und Software, er installiert nur noch un-intelligente Hardware, eben die E/A-Geräte. Um alles komplexe kümmert sich der Anbieter der Rechnerwolke. Dort wird die Ausführung der Aufgaben der Verarbeitungseinheit zentral vorgenommen, zentral gewartet und zentral angepasst. Der einzelne Nutzer zahlt nur einen relativ geringen Nutzungsbeitrag dann, wenn er die Rechnerwolke zur Steuerung seines Gerätes beansprucht.

Da bei einer Vielzahl von parallelen Nutzern immer einige die Dienste der Rechnerwolke zur Steuerung beanspruchen werden, lohnt sich der Betrieb der Rechnerwolke für deren Anbieter.

In einer vorteilhaften Ausführung ist die Rechnerwolke als eine sogenannte öffentliche Rechnerwolke ausgeführt. Diese bietet den Zugang zur Ausführung der Aufgaben der Verarbeitungseinheit für eine breite Öffentlichkeit und von beliebigen Orten, beispielsweise über das Internet. Der Anbieter der öffentlichen Rechnerwolke erlaubt seinen Kunden, den Nutzern, die Rechnerwolke zur Gerätesteuerung zu mieten auf einer flexiblen Basis des Bezahlens für den tatsächlichen Nutzungsgrad, ohne Kapital in eine eigene SPS und deren Wartung und Instandhaltung investieren zu müssen. Man bezeichnet dies auch als ein "pay-per-use" Geschäftsmodell.

In einer vorteilhaften Ausführung ist die Rechnerwolke als eine sogenannte private Rechnerwolke ausgeführt. Diese bietet den Zugang zur Ausführung der Aufgaben der Verarbeitungseinheit innerhalb einer abgeschlossenen Organisation, beispielsweise zur Steuerung mehrerer gleichartiger Geräte in mehreren Betrieben eines Unternehmens, zur Steuerung der Gartenbeleuchtungen in mehreren Wohnanlagen einer Wohnungsbaugesellschaft, etc.

Gemäß einer vorteilhaften Ausführungsform der Erfindung ist die Kommunikationsverbindung zwischen den E/A-Geräten und der Rechnerwolke über das Internet realisiert, wobei ein drahtgebundener oder ein drahtloser Zugang zum Internet vorgesehen sein kann.

Gemäß einer vorteilhaften Ausführungsform der Erfindung ist die Kommunikationsverbindung zwischen den E/A-Geräten und der Rechnerwolke über eine Telefonverbindung realisiert, wobei eine Festnetz-Telefonieverbindung, eine GSM- oder eine Mobiltelefonverbindung vorgesehen sein kann.

Weitere vorteilhafte Ausgestaltungen der Erfindung sind den Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen sowie weitere Vorteile näher erläutert und beschrieben werden.

Es zeigen
- Fig. 1: schematisch ein erfindungsgemäßes System, das eine Rechnerwolke umfasst,
- Fig. 2: eine Ausführungsform eines erfindungsgemäßen Systems zur Steuerung einer kleinen Maschine,
- Fig. 3: eine Ausführungsform eines erfindungsgemäßen Systems zur Schaltung von zwei Lampen

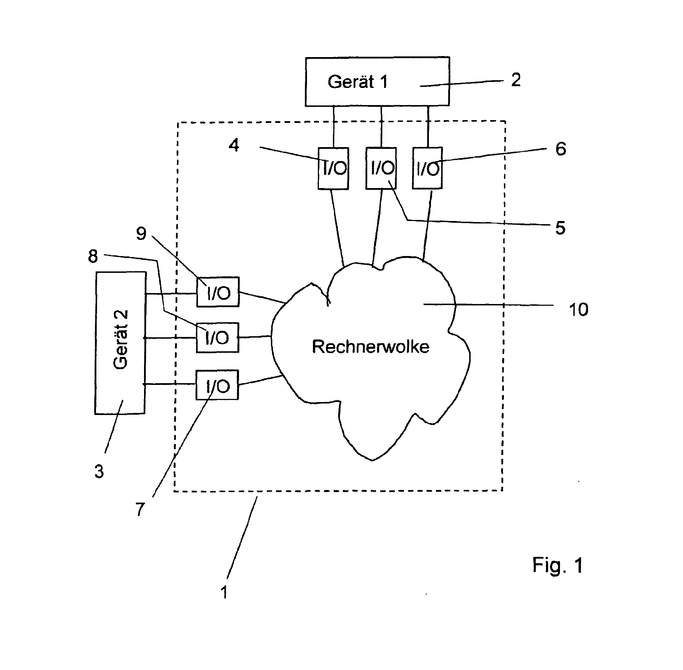

Figur 1 zeigt innerhalb des gestrichelt gezeichneten Kastens ein System 1 zur Steuerung zweier Geräte 2, 3. Jedes der Geräte 2, 3 hat wenigstens einen Sensor oder wenigstens einen Aktor, nicht dargestellt. Das System 1 umfasst zwei Gruppen von je drei Eingabe/Ausgabe-Baugruppen 4, 5, 6; 7, 8, 9. an die erste Gruppe von Eingabe/Ausgabe-Baugruppen 4, 5, 6 ist das erste Gerät 2 angeschlossen, beispielsweise über einen Bus oder über separate Signalleitungen. Das System umfasst eine Verarbeitungseinheit, in der die Eingangssignale der Eingabe/Ausgabe-Baugruppen verarbeitet werden und in Ausgangssignal zur Übermittlung an die Geräte 2, 3 umgesetzt werden. Das System 1 umfasst eine Rechnerwolke 10. Die Rechnerwolke 10 ist dazu eingerichtet, um die Aufgaben der Verarbeitungseinheit zu erfüllen. Die Eingabe/Ausgabe-Baugruppen 4, 5, 6, 7, 8, 9 sind außerhalb der Rechnerwolke 10 und nahe der Geräte 2, 3 angeordnet. Die Eingabe/Ausgabe-Baugruppen 4, 5, 6, 7, 8, 9 sind über eine Kommunikationsverbindung, hier das Internet, mit der Rechnerwolke 10 verbunden. Die Figur 1 zeigt, wie ein einfaches Steuerungssystem, das eine Vielzahl von Nutzern parallel bedienen und damit eine Vielzahl von Geräten, die räumlich weit voneinander entfernt sein können, parallel bedienen und steuern kann, In einer Rechnerwolke realisiert ist. Am Ort der zu steuernden Geräte 2, 3 sind jeweils nur noch einfache, kostengünstige, nicht-intelligente Eingabe/Ausgabe-Baugruppen vorhanden. Die Eingabe/Ausgabe-Baugruppen können von den Benutzern der Geräte 2, 3 selbst entworfen und gerätespezifisch aufgebaut sein. Es können aber auch standardisierte Produkte von Drittanbietern eingesetzt werden.

In der Rechnerwolke ist eine einfache Automatisierungsmaschine zum Steuern der Geräte 2, 3 realisiert. Jeder Betreiber eines der Geräte 2, 3 kann diese Wolken-basierte Automatisierungsmaschine initiieren, aktivieren und benutzen, wenn er sie benötigt. Der Betreiber der Wolken-basierten Automatisierungsmaschine und der Geräte 2, 3 können verschiedene Personen sein. So kann eine Betreiberfirma die Wolken-basierte Automatisierungsmaschine 10 betreiben, instand halten und jeweils an neue Aufgaben anpassen. Die Betreiber der zu steuernden Geräte 2, 3 sind lediglich Kunden der Betreiberfirma. Sie bezahlen nach einem sogenannten "pay-per-use" Geschäftsmodell nur für die Zeiten, in denen sie die Wolken-basierte Automatisierungsmaschine auch nutzen. Die Wolken-basierte Automatisierungsmaschine kann verschiedene Funktionsblöcke umfassen, wie beispielsweise Timer, bedingungsabhängige Trigger, Datenaufzeichnungs-Funktionen, Benachrichtigungsdienste, die über SMS oder e-mail Nachrichten den Zustand der Geräte betreffend versenden, oder über einen Browser abrufbare Anzeigen beziehungsweise Visualisierungen der aufgezeichneten Daten zur Verfügung stellen. Ein Beispiel hierfür ist die Temperaturüberwachung im Inneren eines Gewächshauses.

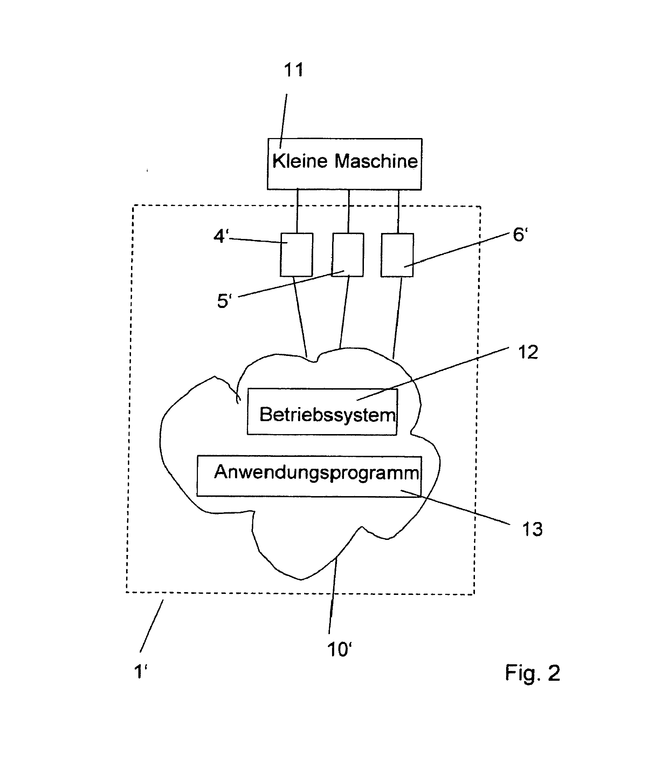

Figur 2 zeigt ein Beispiel für eine erfindungsgemäßes System zur Steuerung einer kleinen Maschine 11, beispielsweise eines Antriebs für eine Kunstinstallation. Das System 1' umfasst zwei Eingabe-Baugruppen 4', 5', eine Ausgabe-Baugruppe 6', und eine Rechnerwolke 10'. Die Eingabe-Baugruppen 4', 5' sind als kostengünstige, einfache Eingabe-Baugruppen ausgeführt, beispielsweise eine digitale Eingabebaugruppe, um den Zustand eines Endschalters in der Maschine 11 abzufragen, und eine einfache analoge Eingabebaugruppe 5', um eine Motordrehzahl abzufragen. Die Ausgabebaugruppe 6' kann eine einfache digitale Ausgabe-Baugruppe sein, um einen Start-StopSchalter der Maschine 11 zu schalten. Die Verbindung der Maschine 11 mit den Eingabe- bzw. Ausgabe-Baugruppen 4', 5', 6' erfolgt konventionell über elektrische Signalkabel. Die Verbindung der Eingabe- bzw. Ausgabebaugruppen 4', 5', 6' mit der Rechnerwolke erfolgt über das Internet.

In der Rechnerwolke 10' werden die Funktionen eines Betriebssystems 12 und eines Anwendungsprogrammes 13 einer SPS ausgeführt. Somit werden in der Rechnerwolke 10' die Aufgaben einer SPS - Verarbeitungseinheit, also beispielsweise das Einlesen der Eingänge, das Erzeugen des Prozessabbildes der Eingänge, das Übermitteln des Prozessabbildes der Eingänge an das Anwendungsprogramm, das Erzeugen des Prozessabbildes der Ausgänge durch das Anwendungsprogramm, das Übermitteln des Prozessabbildes der Ausgänge an die Maschine 11 über das Betriebssystem, ausgeführt.

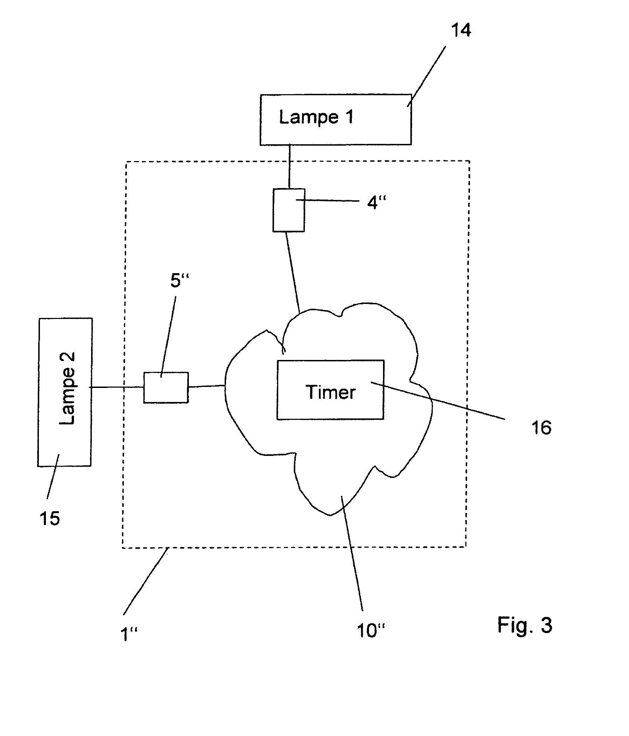

Der Vorteil der erfindungsgemäßen Steuerung über eine Rechnerwolke liegt in der Kostenersparnis für den Anwender, also den Betreiber der kleinen Maschine. Denn oft lohnt sich bei kleinen Maschinen, wie bei der beispielhaft genannten Kunstinstallation, oder einfachen Steuerungsaufgaben die Installation einer SPS nicht. Dann bietet eine erfindungsgemäße Nutzung der Steuerung in der Cloud mit lediglich noch erforderlichen einfachen Eingabe-Ausgabegeräten eine vorteilhafte Alternative zur einfachen, aber unflexiblen festverdrahteten Steuerung. Ein weiterer Vorteil liegt darin, dass der Zugriff auf das Steuerungsprogramm und die Daten von beliebigen Orten aus erfolgen kann. Die Figur 3 zeigt als weiteres Beispiel eine einfache Lampensteuerung über Timer, wie sie beispielsweise im Haushalt als Steuerung der Gartenbeleuchtung verwendet wird. Es sind zwei Lampen 14, 15 gezeigt, die in zwei unterschiedlichen Häusern, die weit voneinander entfernt liegen können, installiert sind. Zwei Lampen 14, 15 sind nur ein Beispiel, es können auch wesentlich mehr sein, bis zu mehreren hunderten oder Tausenden von Lampen. Sie alle werden mittels eines erfindungsgemäßen Systems 1" unter Verwendung einer Rechnerwolke 10" gesteuert. In der Rechnerwolke 10" ist eine Timerfunktion realisiert. Die Timerfunktion wird parallel an verschiedenen Orten zur selben Zeit von der Vielzahl von Anwendern 14, 15 genutzt, indem die vor Ort bei den zu steuernden Lampen 14, 15 befindlichen Schaltaktoren 4", 5" über das Internet mit der Rechnerwolke 10" verbunden sind. So werden diese vielen Anwender von der in der Rechnerwolke 10" realisierten Timerfunktion parallel gesteuert. Vor Ort ist kein Timer mehr erforderlich und keine weitere komplexe Steuerung, sondern lediglich ein billiger, internetfähiger Schaltaktor 4", 5".

### Bezugszeichenliste

- 1: System zur Steuerung
- 1': System zur Steuerung
- 1": System zur Steuerung
- 2: erstes Gerät
- 3: zweites Gerät
- 4: Eingabe/Ausgabe-Baugruppe
- 4': Eingabe-Baugruppe
- 4": Schaltaktor
- 5: Eingabe/Ausgabe-Baugruppe
- 5': Eingabe-Baugruppe
- 5": Schaltaktor
- 6: Eingabe/Ausgabe-Baugruppe
- 6': Ausgabe-Baugruppe
- 7: Eingabe/Ausgabe-Baugruppe
- 8: Eingabe/Ausgabe-Baugruppe
- 9: Eingabe/Ausgabe-Baugruppe
- 10: Rechnerwolke
- 10': Rechnerwolke
- 10": Rechnerwolke
- 11: kleine Maschine
- 12: Betriebssystem
- 13: Anwendungsprogramm
- 14: Lampe
- 15: Lampe
- 16: Timerfunktion

## Patentansprüche

1. System (1) zur Steuerung eines Gerätes (2), wobei das Gerät (2) wenigstens einen Sensor oder wenigstens einen Aktor hat, wobei das System (1) wenigstens eine Eingabe/Ausgabe-Baugruppe (4) umfasst, wobei das System (1) eine Verarbeitungseinheit umfasst, wobei die Eingabe/Ausgabe-Baugruppe (4) mit der Verarbeitungseinheit über eine Kommunikationsverbindung gekoppelt ist, **dadurch gekennzeichnet, dass** das System (1) eine Rechnerwolke (10) umfasst, wobei die Rechnerwolke (10) dazu eingerichtet ist, um die Aufgaben der Verarbeitungseinheit zu erfüllen, dass die Eingabe/Ausgabe-Baugruppe (4) außerhalb der Rechnerwolke (10) und nahe des Gerätes (2) angeordnet ist, und dass die Eingabe/Ausgabe-Baugruppe (4) über eine Kommunikationsverbindung mit der Rechnerwolke (10) verbunden ist.

2. System (1) nach Anspruch 1, **dadurch gekennzeichnet, dass** die Rechnerwolke (10) als eine sogenannte öffentliche Rechnerwolke ausgeführt ist.

3. System (1) nach Anspruch 1, **dadurch gekennzeichnet, dass** die Rechnerwolke (10) als eine sogenannte private Rechnerwolke ausgeführt ist.

4. System (1) nach Anspruch 1, **dadurch gekennzeichnet, dass** die Kommunikationsverbindung zwischen den E/A-Geräten (4, 5, 6) und der Rechnerwolke (10) über das Internet realisiert ist.

5. System (1) nach Anspruch 1, **dadurch gekennzeichnet, dass** die Kommunikationsverbindung zwischen den E/A-Geräten (4, 5, 6) und der Rechnerwolke (10) über eine Telefonverbindung realisiert ist.

6. Verfahren zur Steuerung eines Gerätes (2), **dadurch gekennzeichnet, dass** das Gerät (2) mittels eines Anwendungsprogrammes (13) gesteuert wird, wobei das Anwendungsprogramm (13) in einer Rechnerwolke (10') ausgeführt wird.

7. Ein computerlesbares Medium, in dem ein Computerprogramm zur Steuerung eines Gerätes (11) gespeichert ist, wobei das Computerprogramm eingerichtet ist, um das Verfahren nach Anspruch 6 auszuführen, wenn es auf einem Prozessor ausgeführt wird.

8. Ein Computerprogramm zur Steuerung eines Gerätes (11), das dazu eingerichtet ist, um das Verfahren nach Anspruch 6 auszuführen, wenn es auf einem Prozessor ausgeführt wird.
